# FASCICULE DE BREVET EUROPEEN

(11) **EP 3 035 166 B1**
(45) Date de publication et mention de la délivrance du brevet: **07.11.2018**
(21) Numéro de dépôt: 15188288.3
(22) Date de dépôt: 05.10.2015
(51) Int. Cl.: G06F 3/02, H01H 13/02

(54) **MODULE DE COMMANDE POUR SYSTÈME DE DIALOGUE HOMME-MACHINE**
STEUERUNGSMODUL FÜR MENSCH-MASCHINEN-DIALOGSYSTEM
CONTROL MODULE FOR A HUMAN-MACHINE DIALOGUE SYSTEM

(30) Priorité: 04.11.2014 FR 1460641
(43) Date de publication de la demande: 22.06.2016
(73) Titulaire: Schneider Electric Industries SAS, 92500 Rueil-Malmaison (FR)
(72) Inventeur: FRUCHARD, Bertrand, 16340 L'Isle d'Espagnac (FR); CHAUVET, Francis, 16440 MOUTHIERS (FR)
(74) Mandataire: Dufresne, Thierry

(56) Documents cités:
- EP-A1- 1 096 690
- EP-A1- 1 703 530
- EP-A1- 2 012 431
- US-A1- 2003 058 623
- US-B1- 6 215 204
- Anonymous: "Technoblogy - Getting Extra Pins on ATtiny", , 4 juin 2014 (2014-06-04), XP055200789, Extrait de l'Internet: URL:http://www.technoblogy.com/show?LSE [extrait le 2015-07-08]

## Description

### Domaine technique de l'invention

La présente invention se rapporte à un module de commande pour système de dialogue homme-machine ainsi qu'à un système de dialogue homme-machine incluant ledit module de commande.

Le système de dialogue homme-machine comprend notamment un ou plusieurs organes de dialogue homme-machine connectés en série, un organe de dialogue homme-machine comprenant au moins un contact électrique, un indicateur lumineux ou une combinaison formée d'au moins un contact électrique et d'un indicateur lumineux.

### Etat de la technique

La demande de brevet EP 2 479 646 A1 décrit un système de dialogue homme-machine comportant une première partie munie d'une unité de traitement de données et une unité d'alimentation électrique, une deuxième partie comportant plusieurs organes de dialogue homme-machine dotés chacun, d'une interface de dialogue homme-machine et un bus de communication reliant l'unité d'alimentation et l'unité de traitement à chaque organe de dialogue homme-machine.

Le document US 2003/058623 A1 concerne un système modulaire pour commutateur de sécurité permettant une mise hors ou sous tension en toute sécurité d'éléments d'actionnement, ledit système comprenant au moins un module d'entrée servant à interpréter de manière sûre les données d'un dispositif de sécurité, et à produire un signal de sortie, et au moins un module de sortie servant à actionner de manière sûre l'élément d'actionnement en fonction du signal de sortie du module d'entrée.

Le document XP055200789 concerne différentes conceptions de circuit électrique pour détecter l'état de plusieurs boutons poussoirs connectés à un micro-contrôleur.

Le principal inconvénient de cette architecture est qu'elle utilise des organes de dialogue homme-machine intelligents, c'est-à-dire incluant un microprocesseur et une mémoire pour mémoriser leur état. Cette architecture est ainsi plus complexe et plus couteuse.

Le but de l'invention est de proposer un système de dialogue homme-machine dans lequel les organes de dialogue homme-machine sont dépourvus d'intelligence et un module de commande permettant un adressage de chaque organe de dialogue homme-machine à travers un câblage employant un minimum de fils.

### Exposé de l'invention

Ce but est atteint par un module de commande pour système de dialogue homme-machine défini par les revendications indépendantes.

Ledit système de dialogue homme-machine comprend un ou plusieurs organes de dialogue homme-machine connectés en série, un organe de dialogue homme-machine comprenant un élément fonctionnel comprenant au moins un contact électrique, un indicateur ou une combinaison d'au moins un contact électrique et d'un indicateur, ledit module de commande comprenant un microcontrôleur, une borne commune destinée à être reliée à chaque élément fonctionnel et plusieurs bornes dédiées chacune à la commande individuelle de l'élément fonctionnel de chaque organe de dialogue homme-machine, ledit module de commande comportant également :
- des moyens de lecture agencés pour appliquer, sur une période de lecture, une tension d'un premier signe entre sa borne commune et chaque borne dédiée pour lire l'état de chaque contact électrique des organes de dialogue homme-machine connectés,
- des moyens d'écriture agencés pour appliquer, sur une période d'écriture, une tension de signe opposé au premier signe pour écrire l'état de chaque indicateur des organes de dialogue homme-machine connectés.

Le module de commande est agencé pour commander les moyens de lecture et les moyens d'écriture par alternance dans le temps et la période de lecture est courte par rapport à la période d'écriture.

L'invention concerne également un système de dialogue homme-machine comprenant un module de commande tel que défini ci-dessus et plusieurs organes de dialogue homme-machine connectés en série, un organe de dialogue homme-machine comprenant un élément fonctionnel comprenant au moins un contact électrique, un indicateur ou une combinaison d'au moins un contact électrique et d'un indicateur, ledit module de commande comprenant une borne commune reliée à tous les organes de dialogue homme-machine et une borne dédiée à la commande individuelle de chaque élément fonctionnel des organes de dialogue homme-machine.

Selon une particularité, le système comporte par exemple :
- un organe de dialogue homme-machine doté d'un élément fonctionnel présentant un premier contact électrique et un deuxième contact électrique connectés en parallèle,
- des moyens de détermination de l'état du premier contact électrique et de l'état du deuxième contact électrique sur ladite période de lecture.

Avec un organe de dialogue homme-machine à deux contacts électriques, les moyens de détermination sont agencés pour déterminer l'état de chaque contact électrique par :
- le niveau de courant traversant chaque contact électrique, ou
- le niveau de tension aux bornes de chaque contact électrique, ou
- en découpant la période de lecture en une première partie destinée à la lecture de l'état du premier contact électrique et en une deuxième partie destinée à la lecture de l'état du deuxième contact électrique.

Préférentiellement, les organes de dialogue homme-machine sont reliés au module de commande par une liaison point à point via un réseau de câbles torsadés.

Préférentiellement, l'indicateur est de type lumineux.

### Brève description des figures

D'autres caractéristiques et avantages vont apparaître dans la description détaillée qui suit faite en regard des dessins annexés dans lesquels :
- la figure 1 représente, de manière schématique, le module de commande de l'invention,
- les figures 2A à 2C représente le système de dialogue homme-machine de l'invention dans différentes configurations,
- les figures 3A à 3D, de manière schématique, un organe de dialogue homme-machine dans différentes configurations,
- la figure 4 représente le schéma d'un élément fonctionnel comprenant un indicateur lumineux et un contact électrique connectés en parallèle,
- la figure 5 illustre les temps de lecture et d'écriture appliqués par le module de commande,
- Les figures 6, respectivement 7, représentent un élément fonctionnel à deux contacts électriques connectés en parallèle, respectivement en série, et permettant la lecture de l'état des deux contacts,
- La figure 8A représente un élément fonctionnel à deux contacts électriques connectés en parallèle et permettant la lecture de l'état des deux contacts et la figure 8B illustre le temps de lecture octroyé à la lecture de l'état de chaque contact électrique.

### Description détaillée d'au moins un mode de réalisation

L'invention a pour cadre un système de dialogue homme-machine comprenant :
- plusieurs organes de dialogue homme-machine 2 connectés en série,
- un module de commande 1 réalisé en une ou deux parties.

Le module de commande 1 comporte un microcontrôleur 10 permettant de lire et d'écrire l'état de chaque organe de dialogue homme-machine et un bloc d'interconnexion destiné à adresser individuellement chaque organe de dialogue homme-machine. Le bloc d'interconnexion et le microcontrôleur 10 peuvent être réunis dans un même boîtier ou séparés via une liaison filaire ou sans-fil, l'intelligence du microcontrôleur 10 pouvant être déportée par rapport au bloc d'interconnexion.

Dans la suite de la description, l'emploi de l'expression « module de commande » devra être considéré comme couvrant les deux architectures possibles. Sur les figures annexées, le module de commande est représenté sous la forme d'un boîtier unique intégrant le bloc d'interconnexion et le microcontrôleur 10.

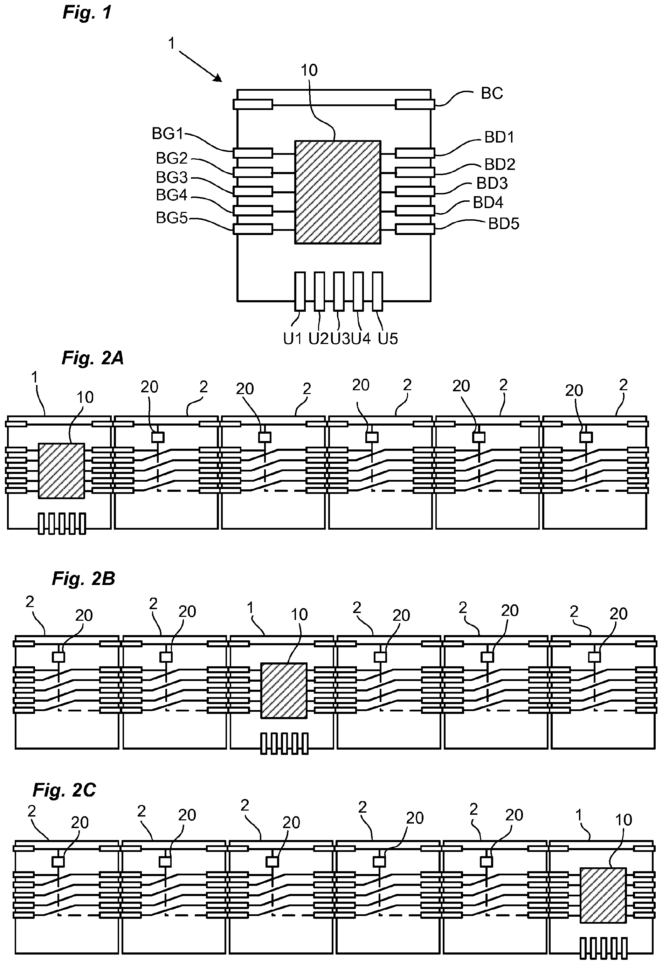

Le module de commande 1 comporte une borne de contact électrique commune BC, une première série de bornes de contact électrique dite amonts BGi, une deuxième série de bornes de contact électrique dite avals BDi, i allant de 1 à n (avec n supérieur ou égal à 2 - n=5 sur la figure 1). Les bornes de contact électrique amonts BGi sont reliées par câblage aux bornes de contact électrique avals BDi, par l'intermédiaire du microcontrôleur 10.

Le module de commande 1 peut également comporter des bornes U1 à U5 lui permettant d'être relié à un système central de commande, par exemple à un contrôleur logique programmable (PLC).

De façon générale, le module de commande selon l'invention est utilisé pour contrôler et commander un ou plusieurs organes de dialogue homme-machine 2.

Chaque organe de dialogue homme-machine 2 se présente sous la forme d'un boîtier et comporte plusieurs bornes, dites amonts BGi (avec i compris entre 1 et n et n supérieur ou égal 2 - n=5 sur les figures annexées), et plusieurs bornes, dites avals BDi (avec i compris entre 1 et n et n supérieur ou égal à 2 - n=5 sur les figures annexées). Chaque organe de dialogue homme-machine 2 comporte également un élément fonctionnel 20 composé d'au moins un contact électrique, d'un indicateur ou d'une combinaison d'au moins un contact électrique et d'un indicateur. L'indicateur peut être de tous types, lumineux, vibrant ou sonore... Dans la suite de la description et sur les figures, nous prendrons l'exemple d'un indicateur lumineux.

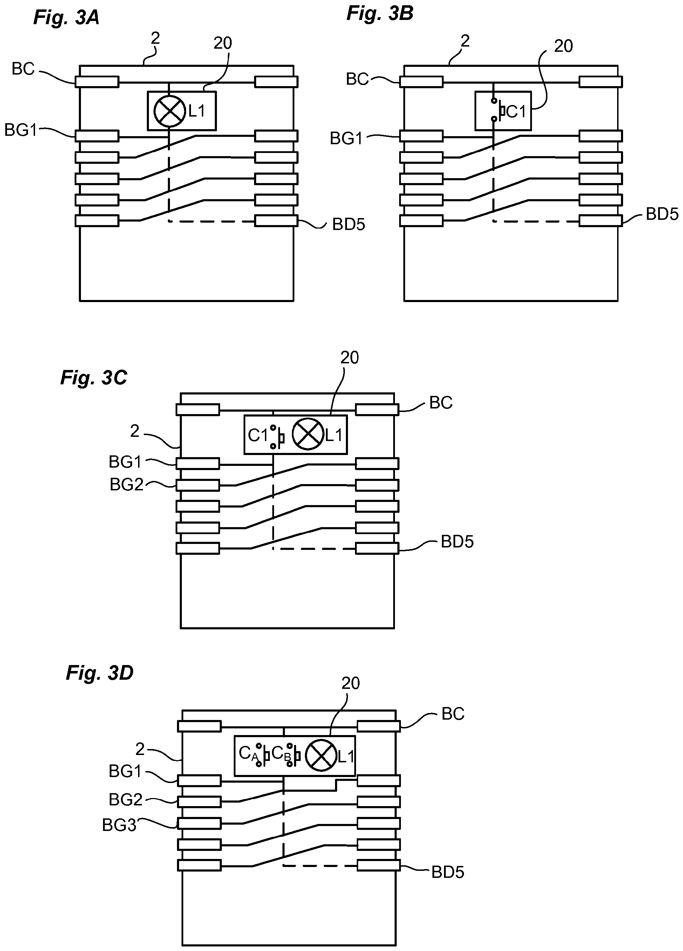

La connexion entre les organes de dialogue homme-machine 2 et le module de commande est réalisée par l'intermédiaire d'un câble torsadée. Selon différentes configurations, on peut avoir :
- un organe de dialogue homme-machine à un élément fonctionnel comprenant un contact électrique C1 ou un indicateur lumineux L1 (figures 3A et 3B) connecté à la borne commune BC, à la borne BG1 et à la borne BDn (BD5 sur les figures 3A et 3B). Chacune des autres bornes BGi (avec i supérieur ou égal à 2) est reliée directement à la borne BDi-1 de cet organe de dialogue.
- un organe de dialogue homme-machine à un élément fonctionnel comprenant un contact électrique C1 et un indicateur lumineux L1 connectés en parallèle (figure 3C à la borne commune BC, à la borne BG1 et à la borne BDn (BD5 sur la figure 3C). Chacune des autres bornes BGi (avec i supérieur ou égal à 2) est reliée directement à la borne BDi-1 de cet organe de dialogue.
- un organe de dialogue homme-machine à un élément fonctionnel comprenant deux contacts électriques C_{A}, C_{B} et un indicateur lumineux L1 connectés en parallèle (figure 3D) à la borne commune BC, à la borne BG1 et à la borne BDn (BD5 sur la figure 3D). Chacune des autres bornes BGi (avec i supérieur ou égal à 2) est reliée directement à la borne BDi-1 de cet organe de dialogue.

Selon la position de l'organe de dialogue homme-machine par rapport au module de commande 1, celui-ci sera adressé par une borne distincte du module de commande 1. Sa position par rapport au module de commande 1 correspond à son adresse. L'organe de dialogue homme-machine 2 ne nécessite donc aucune configuration d'adressage.

L'emploi d'un câblage torsadé permet notamment de pouvoir positionner le module de commande 1 n'importe où par rapport aux organes de dialogue homme-machine, c'est-à-dire en tête (figure 2A), entre au moins deux organes de dialogue homme-machine (figure 2B) ou en queue (figure 2C).

Dans une variante de réalisation de l'invention non représentée, les éléments fonctionnels des organes de dialogue homme-machine sont désolidarisés de la partie connectique et chaque organe de dialogue homme-machine peut être relié physiquement à un autre organe de dialogue homme-machine, qui ne lui est pas nécessairement adjacent, par un câble multiconducteurs.

Il ressort de la description ci-dessus que tous les organes de dialogue homme-machine 2 sont reliés physiquement entre eux et au module de commande 1, soit directement, soit à travers d'autres organes de dialogue adjacents, de sorte que les signaux de contrôle et d'état de chacun de ces organes peuvent être échangés directement avec le module de commande 1. Grâce au câblage torsadé décrit ci-dessus, plusieurs organes de dialogue homme-machine 2 peuvent être reliés en série avec le module de commande 1 et échanger avec ce module des données quelles que soient leur positions respectives par rapport à lui.

Selon l'invention, le module de commande 1 est également agencé pour lire et écrire l'état de chaque élément fonctionnel 20 des organes de dialogue homme-machine 2 qui lui sont connectés.

Pour un organe de dialogue homme-machine dont l'élément fonctionnel comporte au moins un contact électrique C1 et un indicateur lumineux L1 connectés en parallèle entre les mêmes bornes, la lecture et l'écriture ne peuvent être réalisées en même temps.

Pour cela, le module de commande 1 applique une tension positive ou négative entre la borne commune BC et la borne BDi dédiée à l'élément fonctionnel 20 de l'organe de dialogue homme-machine adressé.

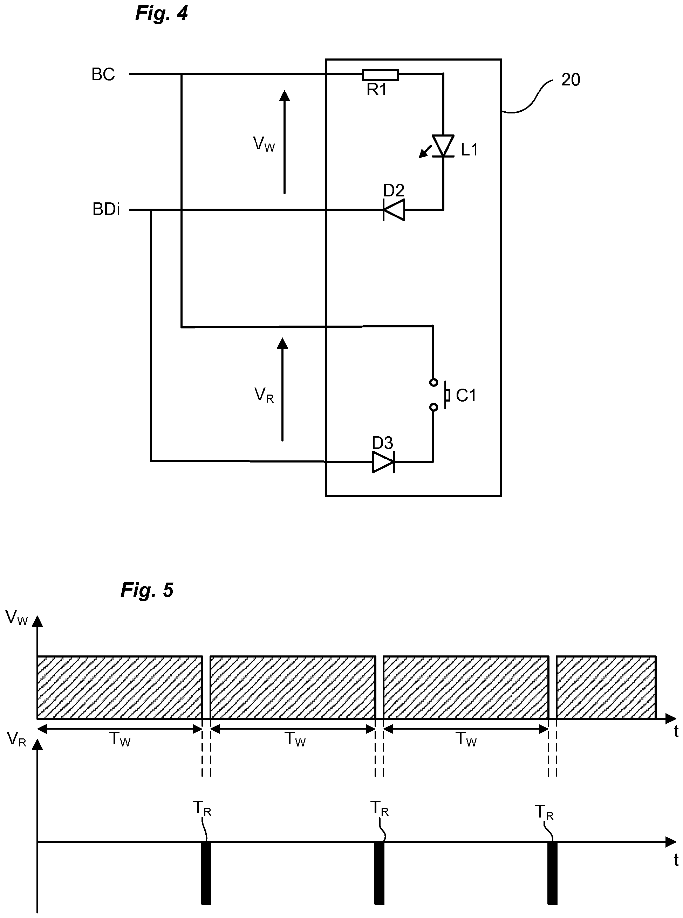

La figure 4 représente de manière schématique l'élément fonctionnel 20 connecté entre la borne commune BC et la borne BDi et comprenant un indicateur lumineux L1, par exemple une diode électroluminescente, et un contact électrique C1 connectés en parallèle entre ces bornes. En plus de l'indicateur lumineux L1, l'élément fonctionnel 20 comporte une résistance R1 et une diode D2 connectées en série avec l'indicateur lumineux L1. Pour écrire l'état de l'indicateur lumineux L1, le module de commande 1 met en oeuvre des moyens d'écriture agencés pour appliquer une tension V_{W} entre les deux bornes, permettant un passage du courant à travers l'indicateur lumineux L1. En série avec le contact électrique C1, l'élément fonctionnel 20 comporte une diode D3, la diode D3 étant orientée en sens inverse par rapport à la diode D2 en série avec l'indicateur lumineux. Pour lire l'état du contact électrique C1, le module de commande met en oeuvre des moyens de lecture agencés pour appliquer une tension V_{R} entre les deux bornes, de signe opposée à la tension V_{W}, et permettant un passage du courant à travers le contact électrique C1 si celui-ci est fermé.

Le signe de chaque tension V_{W} et V_{R} est choisi en fonction de l'orientation des diodes D2, D3.

En référence à la figure 5, pour chaque organe de dialogue homme-machine 2 qui lui est connecté, le module de commande 1 est ainsi agencé pour appliquer une période d'écriture T_{W} et une période de lecture T_{R} des états du contact électrique C1 et de l'indicateur lumineux L1 de l'élément fonctionnel en appliquant en alternance la tension V_{W} et la tension V_{R}. La phase de lecture est réalisée pendant une durée très courte en interrompant la phase d'écriture. La phase de lecture durera par exemple quelques millisecondes et l'interruption destinée à cette lecture restera invisible à l'oeil nu. Comme représenté sur la figure 5, deux périodes longues d'écriture de l'indicateur lumineux sont ainsi séparées à chaque fois par une période courte de lecture du contact électrique. Cette stratégie est appliquée par le module de commande 1 pour chaque organe de dialogue homme-machine 2 du système. La période de lecture représentera par exemple moins de 1% de la durée totale nécessaire à la lecture et à l'écriture.

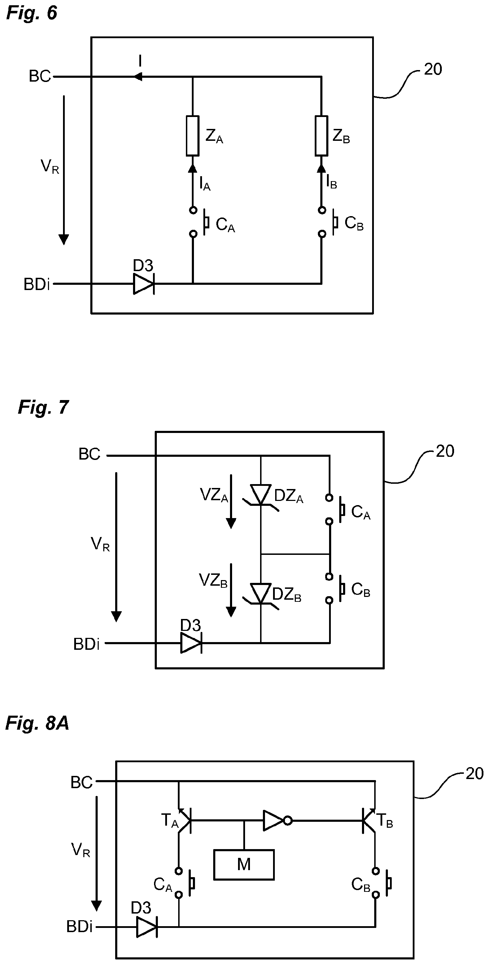

Pour un élément fonctionnel 20 qui comporte deux contacts électriques C_{A}, C_{B} connectés en parallèle, le module de commande 1 doit pouvoir déterminer l'état respectif de chaque contact électrique C_{A}, C_{B}. Les figures 6 à 8 représentent plusieurs modes de réalisation permettant au module de commande 1 de lire les états des deux contacts C_{A}, C_{B} en n'employant toujours qu'un seul fil. Les deux contacts électriques C_{A}, C_{B} sont connectés en parallèle entre la borne commune BC et une borne BDi du module de commande 1.

La figure 6 représente une première solution permettant de discriminer les états des deux contacts C_{A}, C_{B}. Sur la figure 6, deux impédances Z_{A}, Z_{B} sont connectées chacune en série avec un contact C_{A}, C_{B} pour permettre une discrimination par les courants. Les deux impédances Z_{A}, Z_{B} ont des valeurs différentes pour que les deux courants I_{A} et I_{B} qui traversent chaque contact soient de valeurs différentes et permettre ainsi de déterminer lequel des deux contacts est actif lorsqu'un seul des deux contacts est commandé à l'état fermé. En appliquant la tension V_{R} entre la borne commune BC et la borne BDi auxquelles les deux contacts C_{A}, C_{B} sont connectées en parallèle, le module de commande 1 discriminera les états des contacts de la manière suivante :
- C_{A} et C_{B} à l'état ouvert : le courant vu par le module de commande 1 sera nul - I=0
- C_{A} à l'état fermé et C_{B} à l'état ouvert, le courant vu par le module de commande 1 aura pour valeur I=I_{A}=V_{R}/Z_{A}
- C_{A} à l'état ouvert et C_{B} à l'état fermé, le courant vu par le module de commande 1 aura pour valeur I=I_{B}=V_{R}/Z_{B}
- C_{A} à l'état fermé et C_{B} à l'état fermé, le courant vu par le module de commande 1 aura pour valeur I=I_{A}+I_{B}=V_{R}/Z_{A}+V_{R}/Z_{B}

La figure 7 représente une deuxième solution permettant de discriminer les états des deux contacts C_{A}, C_{B}. Sur la figure 7, deux diodes zeners DZ_{A}, DZ_{B} sont connectées chacune en parallèle avec un contact C_{A}, C_{B} pour permettre une discrimination par les tensions. Les deux diodes DZ_{A}, DZ_{B} ont des valeurs différentes pour pouvoir déterminer lequel des deux contacts est actif lorsqu'un seul des deux contacts est commandé à l'état fermé. En appliquant la tension V_{R} entre la borne commune BC et la borne BDi auxquelles les deux contacts C_{A}, C_{B} sont connectées en série, le module de commande 1 discriminera les états des contacts de la manière suivante :
- C_{A} et C_{B} à l'état ouvert : la tension vue par le module de commande est alors égale à : V_{R}=V_{ZA}+V_{ZB}
- C_{A} à l'état fermé et C_{B} à l'état ouvert, la tension vue par le module de commande est alors égale à : V_{R}=V_{ZB}
- C_{A} à l'état ouvert et C_{B} à l'état fermé, la tension vue par le module de commande est alors égale à : V_{R}=V_{ZA}
- C_{A} à l'état fermé et C_{B} à l'état fermé, la tension vue par le module de commande est nulle : V_{R}=0

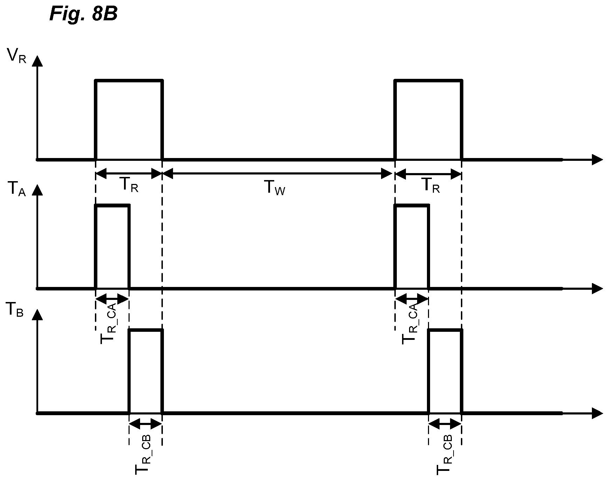

Sur les figures 8A et 8B, la discrimination est réalisée par le temps. Sur la figure 8A, deux transistors T_{A} et T_{B} sont commandées l'un après l'autre pour activer l'une ou l'autre des branches de circuit portant chaque contact C_{A}, C_{B} surveillé. Un organe monostable M permet de commander alternativement les deux transistors T_{A}, T_{B}. En référence à la figure 8B, la période de lecture T_{R} est ainsi découpée en deux parties. En appliquant la tension V_{R} entre la borne commune BC et la borne BDi, sur une première partie de la période de lecture T_{R}, le module de commande 1 lit l'état du premier contact C_{A} et sur une deuxième partie de la période de lecture T_{R}, le module de commande 1 lit l'état du deuxième contact C_{B}.

La solution proposée permettra notamment d'employer un minimum de fils pour adresser chaque organe de dialogue homme-machine du système, sans pour autant nécessiter l'emploi d'intelligence dans les organes, ni d'une méthode de lecture/écriture complexe.

## Revendications

1. Module de commande (1) pour système de dialogue homme-machine, ledit système de dialogue homme-machine comprenant un ou plusieurs organes de dialogue homme-machine (2) connectés en série, un organe de dialogue homme-machine (2) comprenant un élément fonctionnel (20) comprenant au moins un contact électrique (C1), un indicateur (L1) ou une combinaison d'au moins un contact électrique (C1) et d'un indicateur (L1), ledit module de commande (1) comprenant un microcontrôleur (10), une borne commune (BC) destinée à être reliée à chaque élément fonctionnel et plusieurs bornes (BGi, BDi) dédiées chacune à la commande individuelle de l'élément fonctionnel de chaque organe de dialogue homme-machine, **caractérisé en ce qu'**il comporte :
- des moyens de lecture agencés pour appliquer, sur une période de lecture, une tension (V_{R}) d'un premier signe entre sa borne commune (BC) et chaque borne dédiée pour lire l'état de chaque contact électrique (C1) des organes de dialogue homme-machine connectés,
- des moyens d'écriture agencés pour appliquer, sur une période d'écriture, une tension (V_{W}) de signe opposé au premier signe, entre sa borne commune (BC) et chaque borne dédiée, pour écrire l'état de chaque indicateur (L1) des organes de dialogue homme-machine connectés, et **en ce que**
- il est agencé pour commander les moyens de lecture et les moyens d'écriture par alternance dans le temps et **en ce que** la période de lecture est courte par rapport à la période d'écriture.

2. Système de dialogue homme-machine comprenant un module de commande (1) et plusieurs organes de dialogue homme-machine (2) connectés en série, un organe de dialogue homme-machine comprenant un élément fonctionnel (20) comprenant au moins un contact électrique (C1), un indicateur (L1) ou une combinaison d'au moins un contact électrique et d'un indicateur, ledit module de commande (1) comprenant une borne commune (BC) reliée à tous les organes de dialogue homme-machine et une borne dédiée à la commande individuelle de chaque élément fonctionnel (20) des organes de dialogue homme-machine, **caractérisé en ce que** le module de commande (1) est tel que défini dans l'une des revendications précédentes.

3. Système selon la revendication 2, **caractérisé en ce qu'**il comporte :
- un organe de dialogue homme-machine doté d'un élément fonctionnel présentant un premier contact électrique (C_{A}) et un deuxième contact électrique (C_{B}) connectés en parallèle,
- des moyens de détermination de l'état du premier contact électrique (C_{A}) et de l'état du deuxième contact électrique (C_{B}) sur ladite période de lecture.

4. Système selon la revendication 3, **caractérisé en ce que** les moyens de détermination sont agencés pour déterminer l'état de chaque contact électrique par le niveau de courant traversant chaque contact électrique.

5. Système selon la revendication 3, **caractérisé en ce que** les moyens de détermination sont agencés pour déterminer l'état de chaque contact électrique par le niveau de tension aux bornes de chaque contact électrique.

6. Système selon la revendication 3, **caractérisé en ce que** les moyens de détermination sont agencés pour découper la période de lecture (TR) en une première partie destinée à la lecture de l'état du premier contact électrique (CA) et en une deuxième partie destinée à la lecture de l'état du deuxième contact électrique (CB).

7. Système selon l'une des revendications 2 à 6, **caractérisé en ce que** les organes de dialogue homme-machine (2) sont reliés au module de commande par une liaison point à point via un réseau de câbles torsadés.

8. Système selon la revendication 2, **caractérisé en ce que** l'indicateur est de type lumineux.

## Patentansprüche

1. Steuerungsmodul (1) für ein Mensch-Maschine-Dialogsystem, wobei das Mensch-Maschine-Dialogsystem ein oder mehrere in Reihe geschaltete Mensch-Maschine-Dialogorgane (2) umfasst, wobei ein Mensch-Maschine-Dialogorgan (2) ein Funktionselement (20) umfasst, das wenigstens einen elektrischen Kontakt (C1), einen Anzeiger (L1) oder eine Kombination wenigstens eines elektrischen Kontakts (C1) und eines Anzeigers (L1) umfasst, wobei das Steuerungsmodul (1) einen Mikrocontroller (10), eine gemeinsame Anschlussklemme (BC), die dazu bestimmt ist, mit jedem Funktionselement verbunden zu werden, und mehrere Anschlussklemmen (BGi, BDi), die jeweils speziell für die individuelle Steuerung des Funktionselements eines der Mensch-Maschine-Dialogorgane vorgesehen sind, umfasst, **dadurch gekennzeichnet, dass** es aufweist:
- Lesemittel, die dafür ausgelegt sind, über eine Leseperiode eine Spannung (V_{R}) mit einem ersten Vorzeichen zwischen seiner gemeinsamen Anschlussklemme (BC) und jeder speziellen Anschlussklemme anzulegen, um den Zustand jedes elektrischen Kontakts (C1) der angeschlossenen Mensch-Maschine-Dialogorgane abzulesen,
- Schreibmittel, die dafür ausgelegt sind, über eine Schreibperiode eine Spannung (V_{W}) mit einem zum ersten Vorzeichen entgegengesetzten Vorzeichen zwischen seiner gemeinsamen Anschlussklemme (BC) und jeder speziellen Anschlussklemme anzulegen, um den Zustand jedes Anzeigers (L1) der angeschlossenen Mensch-Maschine-Dialogorgane zu schreiben, und dadurch, dass
- es dafür ausgelegt ist, die Lesemittel und die Schreibmittel zeitlich abwechselnd anzusteuern, und dadurch, dass die Leseperiode kurz im Verhältnis zur Schreibperiode ist.

2. Mensch-Maschine-Dialogsystem, welches ein Steuerungsmodul (1) und mehrere in Reihe geschaltete Mensch-Maschine-Dialogorgane (2) umfasst, wobei ein Mensch-Maschine-Dialogorgan ein Funktionselement (20) umfasst, das wenigstens einen elektrischen Kontakt (C1), einen Anzeiger (L1) oder eine Kombination wenigstens eines elektrischen Kontakts und eines Anzeigers umfasst, wobei das Steuerungsmodul (1) eine gemeinsame Anschlussklemme (BC), die mit allen Mensch-Maschine-Dialogorganen verbunden ist, und eine speziell für die individuelle Steuerung des jeweiligen Funktionselements (20) der Mensch-Maschine-Dialogorgane vorgesehene Anschlussklemme umfasst, **dadurch gekennzeichnet, dass** das Steuerungsmodul (1) so beschaffen ist, wie es in einem der vorhergehenden Ansprüche definiert ist.

3. System nach Anspruch 2, **dadurch gekennzeichnet, dass** es aufweist:
- ein Mensch-Maschine-Dialogorgan, das mit einem Funktionselement versehen ist, das einen ersten elektrischen Kontakt (C_{A}) und einen zweiten elektrischen Kontakt (C_{B}), welche parallelgeschaltet sind, aufweist,
- Mittel zur Bestimmung des Zustands des ersten elektrischen Kontakts (C_{A}) und des Zustands des zweiten elektrischen Kontakts (C_{B}) während der Leseperiode.

4. System nach Anspruch 3, **dadurch gekennzeichnet, dass** die Bestimmungsmittel dafür ausgelegt sind, den Zustand jedes elektrischen Kontakts anhand des Pegels des Stroms zu bestimmen, der durch den jeweiligen elektrischen Kontakt fließt.

5. System nach Anspruch 3, **dadurch gekennzeichnet, dass** die Bestimmungsmittel dafür ausgelegt sind, den Zustand jedes elektrischen Kontakts anhand des Spannungspegels an den Anschlussklemmen des jeweiligen elektrischen Kontakts zu bestimmen.

6. System nach Anspruch 3, **dadurch gekennzeichnet, dass** die Bestimmungsmittel dafür ausgelegt sind, die Leseperiode (TR) in einen ersten Teil, der zum Lesen des Zustands des ersten elektrischen Kontakts (CA) bestimmt ist, und in einen zweiten Teil, der zum Lesen des Zustands des zweiten elektrischen Kontakts (CB) bestimmt ist, aufzuteilen.

7. System nach einem der Ansprüche 2 bis 6, **dadurch gekennzeichnet, dass** die Mensch-Maschine-Dialogorgane (2) mit dem Steuerungsmodul durch eine Punkt-zu-Punkt-Verbindung über ein Netz von verdrillten Leitungen verbunden sind.

8. System nach Anspruch 2, **dadurch gekennzeichnet, dass** der Anzeiger vom Typ einer Anzeigeleuchte ist.

## Claims

1. Control module (1) for a human-machine dialogue system, said human-machine dialogue system comprising one or more human-machine dialogue devices (2) connected in series, a human-machine dialogue device (2) comprising a functional element (20) comprising at least one electrical contact (C1), an indicator (L1) or a combination of at least one electrical contact (C1) and of an indicator (L1), said control module (1) comprising a microcontroller (10), a common terminal (BC) designed to be connected to each functional element and several terminals (BGi, BDi) each dedicated to the individual control of the functional element of each human-machine dialogue device, **characterized in that** it comprises:
- reading means configured for applying, over one read period, a voltage (V_{R}) of a first sign between its common terminal (BC) and each dedicated terminal in order to read the state of each electrical contact (C1) of the connected human-machine dialogue devices,
- writing means configured for applying, over one write period, a voltage (V_{W}) of sign opposite to the first sign, between its common terminal (BC) and each dedicated terminal, in order to write the state of each indicator (L1) of the connected human-machine dialogue devices, and **in that**
- it is configured for controlling the reading means and the writing means alternately over time and **in that** the read period is short with respect to the write period

2. Human-machine dialogue system comprising a control module (1) and several human-machine dialogue devices (2) connected in series, a human-machine dialogue device comprising a functional element (20) comprising at least one electrical contact (C1), an indicator (L1) or a combination of at least one electrical contact and of an indicator, said control module (1) comprising a common terminal (BC) connected to all the human-machine dialogue devices and a terminal dedicated to the individual control of each functional element (20) of the human-machine dialogue devices, **characterized in that** the control module (1) is such as defined in one of the preceding claims.

3. System according to Claim 2, **characterized in that** it comprises:
- a human-machine dialogue device equipped with a functional element having a first electrical contact (C_{A}) and a second electrical contact (C_{B}) connected in parallel,
- means for determining the state of the first electrical contact (C_{A}) and the state of the second electrical contact (C_{B}) over said read period.

4. System according to Claim 3, **characterized in that** the determination means are configured for determining the state of each electrical contact by the level of current flowing through each electrical contact.

5. System according to Claim 3, **characterized in that** the determination means are configured for determining the state of each electrical contact by the level of voltage across the terminals of each electrical contact.

6. System according to Claim 3, **characterized in that** the determination means are configured for dividing up the read period (TR) into a first part designed to read the state of the first electrical contact (C_{A}) and into a second part designed to read the state of the second electrical contact (C_{B}).

7. System according to one of Claims 2 to 6, **characterized in that** the human-machine dialogue devices (2) are connected to the control module by a point-to-point link via a network of twisted cables.

8. System according to Claim 2, **characterized in that** the indicator is of the light-emitting type.
